# EUROPEAN PATENT APPLICATION

(11) **EP 2 090 962 A1**
(43) Date of publication of application: **19.08.2009**
(21) Application number: 08151394.7
(22) Date of filing: 13.02.2008
(51) Int. Cl.: G06F 3/02

(54) **Data input device with variable-colour illumination**

(71) Applicant: Research In Motion Limited, Waterloo, Ontario N2L 3W8 (CA)
(72) Inventor: Griffin, Jason, Kitchener, Ontario N2P 2L3 (CA); Hofer, Joseph, Kitchener, Ontario N2H 5C5 (CA)
(74) Representative: Rickard, David John

(57) **Abstract**

A data input device for inputting data to an electronics device includes at least one data input key, a variable-colour light and a light controller. The key(s) is/are configured to facilitate data input to the electronics device and comprises a transparent key indicia. The light of the data input device is coupled to the key(s) and is configured to illuminate the key indicia. The light controller is coupled to the data input light, and is configured to adjust the colour of the transparent key indicia in accordance with colour data received at the light controller.

## Description

### FIELD

This disclosure relates to an input device for a communications device. In particular, this disclosure relates to an illuminated keyboard or keypad.

### BACKGROUND

Many communications devices, such as laptop computers, wireless telephones, personal data assistants, and wireless pagers, include a liquid crystal display (LCD) panel that displays information to the operator of the device, and a physical keyboard/keypad for entering commands and/or data into the device. It is becoming increasingly common for the keyboard/keypad to include a backlight for enhancing the visibility of the key indicia (e.g. alphabetic characters, numbers).

Conventional backlit keyboards are illuminated with a monochrome light source. A backlight controller varies the intensity of the monochrome light source based on measurements in ambient light intensity. Typically, the keys of the conventional backlit keyboard are black. The backlight controller activates the keyboard backlight when the keyboard is exposed to dim and moderately-intense ambient light, and deactivates the keyboard backlight when the keyboard is exposed to bright ambient light.

Cathey (US 7,129,930) describes a backlit keyboard in which each key includes dark-coloured key indicia printed on a transparent light-coloured key face. Farage (US 6,797,902) describes a keyboard in which each key is coupled to a large lamp that illuminates the transparent key face, and a small lamp that illuminates the dark-coloured key indicia. Knox (US 6,950,087) describes a backlit keyboard in which the keys are illuminated by a variable-position prism that allows the user to manually adjust the colour of the backlight. Stokic (US 2006/0061542) describes a keyboard that is coupled to a display controller. The display controller transmits key indicia to the keys, and adjusts the intensity of the key indicia, and the contrast between the background and the key indicia, based on the ambient light level.

### SUMMARY

By way of overview, in a first aspect this disclosure relates to a data input device for inputting data to an electronics device. As will be described in further detail below, the data input device comprises at least one data input key, a variable-colour backlight, and a light controller coupled to the variable-colour backlight. The key(s) is/are configured to facilitate data input to the electronics device, and comprises a transparent key indicia. The variable-colour backlight is coupled to the key(s) and is configured to illuminate the key indicia. The light controller is coupled to the variable-colour backlight, and is configured to adjust the colour of the transparent key indicia in accordance with colour data received at the light controller.

Each key may comprise a capacitive touch-sensitive key or a mechanical key.

In one implementation, the data input device also comprises a light sensor for determining the colour of ambient light at the data input device. The light controller is coupled to the light sensor and is configured to set the backlight colour in accordance with the ambient colour determined by the light sensor. In another implementation, the light controller is configured to set the backlight colour to the colour of the key face after a period of inactivity at the data input device.

In a second aspect, this disclosure relates to a portable electronics device that comprises a data input device, a light sensor and a light controller. The data input device comprises at least one data input key and a variable-colour backlight. The key(s) is/are configured to facilitate data input to the portable electronics device, and comprise a key indicia. The input device backlight is configured to illuminate the key indicia. The light sensor is configured to determine the colour of ambient light at the portable electronics device. The light controller is coupled to the input device backlight and the light sensor, and is configured to adjust the colour of light emitted by the input device light based on the ambient colour determined by the light sensor.

The key(s) may comprise an opaque key face, with the key indicia comprising a transparent key indicia. In one implementation, each key face is white or silver in colour.

The portable electronics device may be implemented as a handheld communications device. In one implementation, the light controller is configured to set the colour of the emitted light to the colour of the key face when the electronics device is in an inactive or sleep state. Alternately, or additionally, the light controller may be configured to set the colour of the emitted light to the colour of the key face after a period of inactivity at the data input device.

In other implementation, the portable electronics device also comprises a display device having a variable-colour backlight. The light controller is coupled to the display device light and is configured to adjust the colour of light emitted by the display device light based on the ambient colour determined by the light sensor.

In a third aspect, this disclosure relates to a method of controlling a colour of light emitted by a data input device in a portable electronics device. The method may be implemented as a set of computer processing instructions that are stored on a computer-readable medium. The portable electronics device comprises a light sensor, and the data input device comprises at least one data input key and a variable-colour light. The key(s) is/are configured to facilitate data input to the portable electronics device, and comprise a key indicia. The input device light is configured to illuminate the key indicia.

As will be described in further detail below, the method involves determining a colour of ambient light at the device with the light sensor, and automatically adjusting the colour of light emitted by the input device light base on the ambient colour determined by the light sensor.

In one implementation, the key(s) comprises an opaque key face, with the key indicia comprising a transparent key indicia. The colour adjusting step comprises setting the colour of the emitted light to the colour of the key face when the electronics device is in an inactive or sleep state. Alternately, or additionally, the colour adjusting step may comprise setting the colour of the emitted light to the colour of the key face after a period of inactivity at the data input device.

In other implementation, the portable electronics device also comprises a display device having a variable-colour light, and the colour adjusting step comprises adjusting the colour of light emitted by the display device light based on the ambient colour determined by the light sensor.

### BRIEF DESCRIPTION OF THE DRAWINGS

Fig. 1 is a front plan view of a portable electronics device, depicting the illuminated keyboard;
Fig. 2 is a schematic diagram depicting certain functional details of the portable electronics device, including the illuminated keyboard and the data processing system; and
Fig. 3 is a flowchart that depicts the method of operation of the illuminated keyboard and the data processing system.

### DETAILED DESCRIPTION Communications Device 200

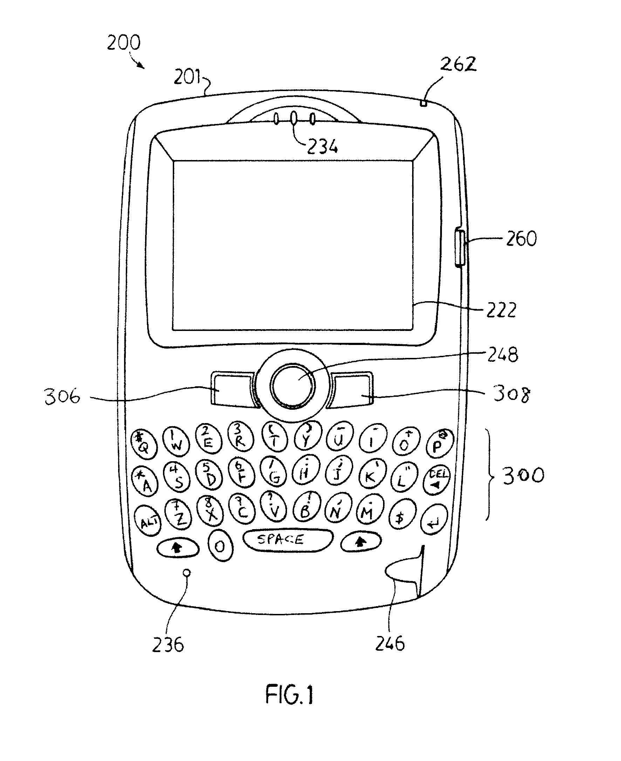

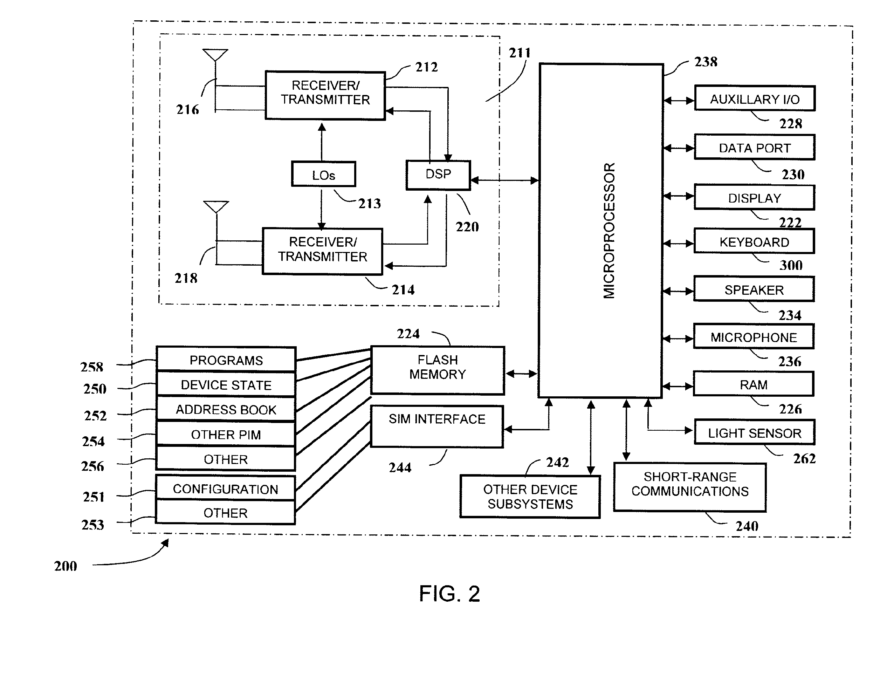

Turning now to Figs. 1 and 2, there is shown a sample handheld communications device 200. Preferably, the handheld communications device 200 is a two-way wireless communications device having at least voice and data communication capabilities, and is configured to operate within a wireless network. Depending on the exact functionality provided, the wireless handheld communications device 200 may be referred to as a data messaging device, a two-way pager, a wireless e-mail device, a cellular telephone with data messaging capabilities, a wireless Internet appliance, or a data communication device, as examples.

The handheld communications device 200 includes a plurality of user-operable data input devices, a display 222, a communication subsystem 211, an ambient light sensor 262, a data processing system (not shown), and various other device subsystems and electronics circuits all disposed within a common housing 201. The operator of the communications device 200 uses the user-operable data input devices to input data (text/commands) to the device 200. As shown, the user-operable data input devices include a keyboard 300, a function key 246, a trackball 248 and an escape key 260. However, the user-operable data input devices are not limited to these forms of data input. For instance, the user-operable data input devices may a thumbwheel or other pointing device instead of (or in addition to) the trackball 248.

Fig. 1 depicts a sample keyboard 300 of the communications device 200. The keyboard 300 includes a plurality data input keys which the operator of the device 200 uses for data input (text/commands) to the data processing system. The data input keys may comprise conventional mechanical keys, or capacitive touch-sensitive keys. The data input keys each have an opaque top face, and key indicia provided on the top face. Preferably, the key face of each data input key has a contrasting colour to that of the key indicia. For instance, the key face may have a light colour, such as white or silver, and the key indicia may have a dark colour, such as black. However, the key face may have the same colour as the key indicia. Further, the key face and the key indicia may have the same colour as the device housing 201.

The key indicia identify the function of the corresponding data input key. For instance, the key indicia shown in Fig. 1 reveals that the sample keyboard 300 comprises alphabetic keys, numeric keys, symbol keys, and control keys (e.g. delete, backspace, return, shift, alt). The data input keys may also include dedicated command/function keys, such as a dedicated "Call" key 306 and a dedicated "End" key 308 to respectively initiate and terminate voice communication. The data input keys may have a single key indicia (indicating that the key has a single function), or may have multiple key indicia (indicating that the key has multiple functions).

Although the keyboard 300 is shown comprising alphabetic keys and numeric keys, it should be understood that the communications device 200 may instead include a keypad that includes only numeric keys. Further, alternate key layouts are encompassed by the keyboard 300. For ease of understanding, however, the following discussion will focus on the structure of the keyboard 300, although a keypad would have a similar structure.

The keyboard 300 includes a variable-colour keyboard light (not shown) that illuminates the keys. The key indicia is transparent and may be substantially colourless. Alternately, the key indicia may be coloured. The keyboard light comprises a variable-colour backlight that is disposed beneath the keys and illuminates the key indicia. The keyboard light may comprise one or more light emitting diodes (LEDs) that are coupled to the keys via a light guide. However, other light sources may be used for the keyboard backlight, such as a fluorescent tube or a luminescent film.

Further, the keyboard light need not be disposed beneath the keys, and the key indicia need not be transparent. In one embodiment, not shown, the communications device 200 is implemented as a laptop computer, and the key indicia are substantially reflective. The keyboard light is housed within the laptop display, and illuminates the key indicia by reflecting light off the top face of the data input keys.

The display 222 includes a display light that emits visible light to enhance the readability of information rendered on the display 222. The display light may be a monochrome light, or may comprise a variable-colour light. In one implementation, the display 222 comprises a transmissive liquid crystal display, the display light comprises a backlight, and the function key 246 operates as a power on/off and backlight switch. In another implementation, the display 222 comprises a reflective or trans-reflective liquid crystal display, the display light comprises a frontlight (for the reflective liquid crystal display) or a backlight (for the trans-reflective liquid crystal display), and the function key 246 operates as a front/backlight switch.

The ambient light sensor 262 may be configured to measure the intensity of at least one wavelength (colour) of light. Alternately, the ambient light sensor 262 may be configured to measure the intensity of a number of different wavelengths (colours) of visible light. As shown in Fig. 1, the ambient light sensor 262 may be disposed above the display 222, adjacent the uppermost end of the communications device 200, to thereby determine the spectral characteristic(s) of the ambient light reaching the communications device 200. Alternately, the ambient light sensor 262 may be disposed between the display 222 and the keyboard 300, or may be integrated into the keyboard 300, to more accurately determine the spectral characteristic(s) of the ambient light that is illuminating the keyboard 300.

The data processing system will be discussed in greater detail below. At this point, however, it is sufficient to point out that the data processing system is in communication with the various device subsystems, including the user-operable data input devices, the display 222, the communication subsystem 211, and the ambient light sensor 262, and controls the overall operation of the communications device 200. Further, the data processing system uses the light sensor 262 to determine the spectral characteristic(s) of the ambient light at the portable electronics device 200, and is configured to adjust the colour of light emitted by the keyboard light (and optionally the display light) based on the spectral characteristic(s) of the ambient light.

### Communications Subsystem 211

Fig. 2 depicts functional details of the handheld communications device 200. The handheld communications device 200 incorporates a motherboard that includes various device subsystems, such as the communication subsystem 211 and the data processing system. The communication subsystem 211 performs communication functions, such as data and voice communications, and includes a primary transmitter/receiver 212, a secondary transmitter/receiver 214, a primary internal antenna 216 for the primary transmitter/receiver 212, a secondary internal antenna 218 for the secondary transmitter/receiver 214, one or more local oscillators (LOs) 213 and one or more digital signal processors (DSP) 220 coupled to the transmitter/receivers 212, 214.

Typically, the communication subsystem 211 sends and receives wireless communication signals over a wireless cellular network via the primary transmitter/receiver 212 and the primary internal antenna 216. Further, typically the communication subsystem 211 sends and receives wireless communication signals over a wireless local area network via the secondary transmitter/receiver 214 and the secondary internal antenna 218.

The primary internal antenna 216 can be configured for use within a Global System for Mobile Communications (GSM) cellular network or a Code Division Multiple Access (CDMA) cellular network. Further, the secondary internal antenna 218 can be configured for use within a WLAN WiFi (IEEE 802.11x) or Bluetooth network. Although the handheld communications device 200 is depicted in Fig. 2 with two antennas, it should be understood that the handheld communications device 200 may instead comprise only a single antenna, with a dual-band antenna being connected to both the primary transmitter/receiver 212 and the secondary transmitter/receiver 214.

Signals received by the primary internal antenna 216 from the wireless cellular network are input to the receiver section of the primary transmitter/receiver 212, which performs common receiver functions such as frequency down conversion, and analog to digital (A/D) conversion, in preparation for more complex communication functions performed by the DSP 220. Signals to be transmitted over the wireless cellular network are processed by the DSP 220 and input to transmitter section of the primary transmitter/receiver 212 for digital to analog conversion, frequency up conversion, and transmission over the wireless cellular network via the primary internal antenna 216.

Similarly, signals received by the secondary internal antenna 218 from the wireless local area network are input to the receiver section of the secondary transmitter/receiver 214, which performs common receiver functions such as frequency down conversion, and analog to digital (A/D) conversion, in preparation for more complex communication functions performed by the DSP 220. Signals to be transmitted over the wireless local area network are processed by the DSP 220 and input to transmitter section of the secondary transmitter/receiver 214 for digital to analog conversion, frequency up conversion, and transmission over the wireless local area network via the secondary internal antenna 218.

The communications device 200 also includes a SIM interface 244 if the handheld communications device 200 is configured for use within a GSM network, and/or a RUIM interface 244 if the handheld communications device 200 is configured for use within a CDMA network. The SIM/RUIM interface 244 is similar to a card-slot into which a SIM/RUIM card can be inserted and ejected. The SIM/RUIM card holds many key configurations 251, and other information 253 including subscriber identification information, such as the International Mobile Subscriber Identity (IMSI) that is associated with the handheld communications device 200, and other subscriber-related information.

In data communication mode, a received text message or web page download will be processed by the communication subsystem 211 and output to the display 222, or alternatively to the auxiliary input/output (I/O) subsystem 228. A user of the handheld communications device 200 may compose data items such as email messages for example, using the keyboard 300. Such composed items may then be transmitted over the wireless cellular network or the local area wireless network through the communication subsystem 211.

For voice communications, overall operation of the handheld communications device 200 is similar, except that received signals would preferably be output to the speaker 234 and signals for transmission would be generated by a microphone 236. Further, the display 222 may provide an indication of the identity of a calling party, the duration of a voice call, or other voice call related information for example.

### Data Processing System

The data processing system interacts with the device subsystems such as the communication subsystem 211, display 222, auxiliary input/output (I/O) subsystem 228, data port 230, speaker 234, microphone 236, short-range communications subsystem 240, device subsystems 242, ambient light sensor 262, and the keyboard 300. The data port 230 may comprise a RS-232 port, a Universal Serial Bus (USB) port or other wired data communication port.

The data processing system comprises a microprocessor 238, flash memory 224, and volatile memory (RAM) 226. The flash memory 224 includes both computer program storage 258 and program data storage 250, 252, 254 and 256. Computer processing instructions are preferably also stored in the flash memory 224 or other similar non-volatile storage. The computer processing instructions, when executed by the microprocessor 238 from the flash memory 224, implement computer programs 258, an operating system, and operating-system specific applications. Alternately, the computer processing instructions may be copied from the flash memory 224 into the RAM 226 upon system reset or power-up, and executed by the microprocessor 238 out of the RAM 226. The computer processing instructions may be installed onto the handheld communications device 200 upon manufacture, or may be loaded through the cellular wireless network, the auxiliary I/O subsystem 228, the data port 230, the short-range communications subsystem 240, or the device subsystem 242.

Typically, the computer programs 258 include communication software that allows the handheld communications device 200 to receive one or more communication services. For instance, preferably the communication software includes internet browser software, SMS message and e-mail software, telephone software and map software that respectively allow the handheld communications device 200 to communicate with various computer servers over the Internet, send and receive messages/e-mail, initiate and receive telephone calls, and view electronic maps. The computer programs 258 may also include application software, such as calendar software which diarizes due dates and/or appointments of importance to the user, memo software that allows the user to create and edit memos, and/or task management software that tracks of the status of tasks of importance to the user.

The operating system comprises an Open Systems Interconnection (OSI) communication protocol stack that allows the handheld communications device 200 to send and receive communication signals over the wireless cellular network and the local area wireless network. The operating system also allows the handheld communications device 200 to operate the auxiliary input/output (I/O) subsystem 228, data port 230, display 222, speaker 234, microphone 236, short-range communications subsystem 240, device subsystems 242, and the keyboard 300.

The operating-system specific applications may comprise a spectrum determination procedure, and a keyboard/display light controller procedure. The spectrum determination procedure configures the data processing system to determine the spectral characteristic(s) of ambient light at the communications device 200, based on the light intensity measurements received from the light sensor 262. The keyboard/display light controller procedure configures the data processing system to adjust the colour of light that is emitted by the variable-colour keyboard light (and optionally the variable-colour display light) based on spectral/colour characteristic(s) data received from the spectrum determination procedure.

It should also be understood that although the spectrum determination procedure, and a keyboard/display light controller procedure may be implemented as computer processing instructions, they may be implemented in electronics hardware instead. For instance, the light sensor 262 may be configured to determine the spectral characteristic(s) of ambient light at the communications device 200, in which case the keyboard/display light controller procedure could receive the spectral/colour characteristic(s) data from the light sensor 262 directly, without the need for a separate spectrum determination procedure. Alternately, the functionality of the spectrum determination procedure and the keyboard/display light controller procedure could be incorporated into the keyboard electronics, without the need for separate procedures in the data processing system.

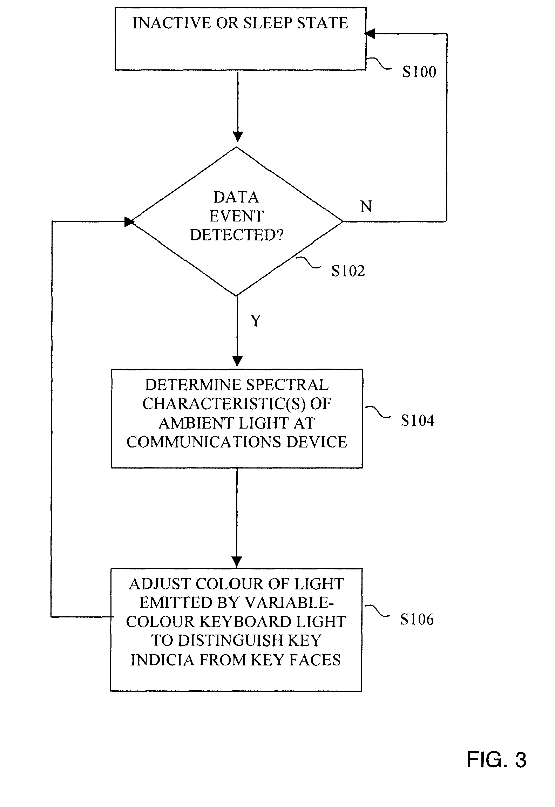

Fig. 3 is a flow chart that depicts the method of operation of the keyboard light and the data processing system. Initially, the communications device 200 may be in an inactive or sleep state, at block S100. In the implementation where the key face of each key of the keyboard 300 has a contrasting colour to that of its key indicia, at block S100 the communications device 200 is in an inactive or sleep state, and the keyboard/display light controller procedure turns the variable-colour keyboard light and the variable-colour display light (if present) off. As a result, the key indicia will be visible to the operator of the communications device 200 if the communications device 200 is in a moderately bright light.

In the implementation where the key face of each key of the keyboard 300 has the same colour to that of its key indicia, at block S100 the communications device 200 is in an inactive or sleep state, and the keyboard/display light controller procedure turns the variable-colour keyboard light and the variable-colour display light (if present) off. Alternately, in the implementation where the key indicia is substantially colourless, at block S100 the communications device 200 is in an inactive state, and the keyboard/display light controller procedure causes the colour of light that is emitted by the variable-colour keyboard light to match the colour of the key face of the corresponding key of the keyboard 300. In each of these latter two situations, at block S100 the key indicia will be substantially invisible to the operator of the communications device 200.

The data processing system maintains the variable-colour keyboard light and the variable-colour display light (if present) at the minimum/off intensity until the data processing system detects a data event. Possible data events include activity at any of the user-operable data input devices (e.g. a key being pressed on the keyboard 300, the trackball 248 being moved, or the function key 246 or the escape key 260 being depressed), an incoming message (such as a telephone call or e-mail message), or a predetermined event (such as a scheduled meeting or task).

If, at block S102, the data processing system detects a data event, the communications device 200 exits the inactive/sleep state. Then, at block S104, the data processing system determines the spectral characteristic(s) of the ambient light at the communications device 200 via the light sensor 262. For instance, as discussed above, the ambient light sensor 262 may be configured to measure the intensity of a single wavelength (colour) of light, in which case the spectrum determination procedure may determine the spectral characteristics by simply sampling the data output of the ambient light sensor 262 at block S104. Alternately, the ambient light sensor 262 may be configured to measure the intensity of a number of different wavelengths (colours) of visible light, in which case the spectrum determination procedure may determine the spectral characteristics by sampling the data output of the ambient light sensor 262 and incorporating each set of data samples into a single data word, at block S104.

The keyboard/display light controller procedure then receives the spectral/colour characteristic(s) data from the spectrum determination procedure. Based on the spectral/colour characteristic(s) data, at block S106 the keyboard/display light controller procedure adjusts the colour of light that is emitted by the variable-colour keyboard light so that the operator of the communications device 200 can easily distinguish the key indicia from the associated key faces under the current characteristics of the ambient light. At block S106, the keyboard/display light controller procedure may also adjust the colour of light that is emitted by the variable-colour display light to match that of the variable-colour keyboard light.

The process repeats as long as the communications device 200 is powered on. Therefore, as long as the data processing system continues to detect data events at block S102, the data processing system continues to determine the spectral characteristic(s) of the ambient light at the communications device 200 via the light sensor 262 at block S104, and to make adjustments in the colour of light that is emitted by the variable-colour keyboard light, at block S106, so that the operator of the communications device 200 can easily distinguish the key indicia from the associated key faces.

However, if at block S102, the data processing system hasn't detected a data event at any of the user-operable data input devices for a predetermined period, processing returns to block S100. If the key face of each key of the keyboard 300 has the same or a contrasting colour to that of its key indicia, at block S100 the keyboard/display light controller procedure turns the variable-colour keyboard light and the variable-colour display light (if present) off. The data processing system then enters the sleep state, awaiting the next data event.

Alternately, if the key indicia is substantially colourless, at block S100 the keyboard/display light controller procedure causes the colour of light that is emitted by the variable-colour keyboard light to match the colour of the key face of the corresponding key of the keyboard 300. The data processing system then enters the inactive state, awaiting the next data event.

As discussed above, the backlight controller of the conventional backlit keyboard varies the intensity of the monochrome keyboard backlight based on measurements in ambient light intensity. However, the key faces of the conventional backlit keyboard are typically black in colour. If the key faces are light coloured, activation of the conventional keyboard backlight causes the key indicia to become washed out under moderate ambient light. By employing a variable-colour keyboard light, and adjusting the colour of the keyboard light based on based on the spectral/colour characteristic(s) of the ambient light, the key indicia of the keyboard 300 can be read over a broad range of lighting conditions, even if the key faces of the keys are white or silver in colour.

## Claims

1. A data input device for inputting data to an electronics device, the data input device comprising:
at least one data input key, the at least one key being configured to facilitate data input to the electronics device and comprising a key indicia;
a variable-colour light coupled to the at least one key, the input device light being configured to illuminate the key indicia; and
a light controller coupled to the variable-colour light and being configured to adjust a colour of the transparent key indicia in accordance with colour data received at the light controller.

2. The data input device according to Claim 1, wherein the at least one key comprises an opaque key face, and the key indicia comprises a transparent key indicia.

3. The data input device according to Claim 2, wherein the at least one key comprises a capacitive touch-sensitive key.

4. The data input device according to any one of Claims 1 to 3, wherein the key face has a key face colour, and the light controller is configured to set the colour of the emitted light to the key face colour when the electronics device is in a sleep state and/or after a period of inactivity at the data input device.

5. A method of controlling a colour of light emitted by a data input device in a portable electronics device, the data input device comprising at least one data input key and a variable-colour light, the at least one key being configured to facilitate data input to the portable electronics device and comprising a key indicia, the input device light being configured to illuminate the key indicia, the portable electronics device comprising a light sensor, the method comprising:
determining a colour of ambient light at the device with the light sensor; and
automatically adjusting the colour of light emitted by the input device light in accordance with the determined colour.

6. The method according to Claim 5, wherein the at least one key comprises an opaque key face, and the key indicia comprises a transparent key indicia, the key face having a key face colour, and the colour adjusting step comprises setting the colour of the emitted light to the key face colour when the electronics device is in a sleep state and/or after a period of inactivity at the data input device.

7. The method according to Claim 6, wherein the portable electronics device comprises a display device having a variable-colour light, and the colour adjusting step comprises adjusting a colour of light emitted by the display device light in accordance with the determined colour.

8. A computer-readable medium carrying processing instructions for an electronics device, the processing instructions when executed by a processor of the electronics device causing the electronics device to perform the steps of the method of any one of Claims 5 to 7.

9. A portable electronics device comprising:
the data input device according to any one of Claims 1 to 4; and
a light sensor configured to determine a colour of ambient light at the portable electronics device,
wherein the key indicia comprises a transparent key indicia, and the light controller is coupled to the light sensor and is configured to adjust the colour of light emitted by the input device light in accordance with the determined colour.

10. The portable electronics device according to Claim 9, further comprising a display device having a variable-colour light, the light controller being coupled to the display device light and being configured to adjust a colour of light emitted by the display device light in accordance with the determined colour.

## Amended claims

### Amended claims in accordance with Rule 137(2) EPC.

**1.** A data input device for inputting data to an electronics device, the data input device comprising:
at least one data input key, the at least one key being configured to facilitate data input to the electronics device and comprising an opaque key face and a key indicia, the opaque key face being contrasting in colour to a colour of the key indicia;
a variable-colour light coupled to the at least one key, the input device light being configured to illuminate the key indicia; and
a light controller coupled to the variable-colour light and being configured to adjust a colour emitted by the variable-colour light in accordance with colour data received at the light controller.

**2.** The data input device according to Claim 1, wherein the at least one key comprises a capacitive touch-sensitive key.

**3.** The data input device according to Claim 2, wherein the colour data comprises intensity measurements of a plurality of different wavelengths of ambient light.

**4.** A method of controlling a colour of light emitted by a data input device in a portable electronics device, the data input device comprising at least one data input key and a variable-colour light, the at least one key being configured to facilitate data input to the portable electronics device and comprising an opaque key face and a key indicia, the opaque key face being contrasting in colour to a colour of the key indicia, the input device light being configured to illuminate the key indicia, the portable electronics device comprising a light sensor, the method comprising:
determining a colour of ambient light at the device with the light sensor; and
automatically adjusting the colour of light emitted by the input device light in accordance with the determined colour.

**5.** The method according to Claim 4, wherein the ambient light determining step comprises measuring an intensity of a plurality of different wavelengths of the ambient light, and the colour adjusting step comprises adjusting the colour of light emitted by the input device light in accordance with the intensity of the wavelengths.

**6.** The method according to Claim 5, wherein the portable electronics device comprises a display device having a variable-colour light, and the colour adjusting step further comprises adjusting a colour of light emitted by the display device light in accordance with the determined colour.

**7.** A computer-readable medium carrying processing instructions for an electronics device, the processing instructions when executed by a processor of the electronics device causing the electronics device to perform the steps of the method of any one of Claims 4 to 6.

**8.** A portable electronics device comprising:
the data input device according to any one of Claims 1 to 3; and
a light sensor configured to determine a colour of ambient light at the portable electronics device,
wherein the light controller is coupled to the light sensor and is configured to adjust a colour of the key indicia in accordance with the determined colour.

**9.** The portable electronics device according to Claim 8, further comprising a display device having a variable-colour light, the light controller being coupled to the display device light and being configured to adjust a colour of light emitted by the display device light in accordance with the determined colour.

**10.** The portable electronics device according to Claim 9, wherein the key indicia are reflective, and the display device light is configured to adjust the colour of the key indicia by reflecting light off the data input keys.
